# EUROPEAN PATENT APPLICATION

(11) **EP 4 366 375 A1**
(43) Date of publication of application: **08.05.2024**
(21) Application number: 22831228.6
(22) Date of filing: 08.03.2022
(51) Int. Cl.: H04W 36/00, H04W 88/04

(54) **GROUP HANDOVER METHOD, DEVICE, AND APPARATUS, AND STORAGE MEDIUM**

(30) Priority: 28.06.2021 CN 202110722076
(71) Applicant: Datang Mobile Communications Equipment Co., Ltd., Beijing 100085 (CN)
(72) Inventor: ZHAO, Yali, Beijing 100085 (CN)
(74) Representative: dompatent von Kreisler Selting Werner - Partnerschaft von Patent- und Rechtsanwälten mbB
(86) International application number: PCT/CN2022/079752
(87) International publication number: WO 2023/273397

(57) **Abstract**

Embodiments of the present invention provide a group handover method, device, and apparatus, and a storage medium. The method is applied to a source network device and comprises: performing handover decision (400); and after performing group handover, sending a handover request message to a target network device, the handover request message carrying first indication information for representing a terminal group (401). By means of the group handover method, device, and apparatus, and the storage medium provided in the embodiments of the present invention, after performing handover decision and determining that group handover is performed, the source network device may send the handover request message to the target network device, and the handover request message carries first indication information for representing the terminal group, such that a relay terminal in a group and a remote terminal, that the relay terminal serves, in the group can jointly perform group handover, thereby filling the gap in group handover of a U2N relay communication system.

## Description

### CROSS-REFERENCE TO RELATED APPLICATION

The present application claims priority to Chinese Patent Application No. 2021107220765, filed on June 28, 2021, entitled "Group Handover Method, Device, and Apparatus, and Storage Medium", which is hereby incorporated by reference in its entirety.

### FIELD

The present application relates to the field of communication, and in particularly to methods and apparatuses for group handover, devices, and a storage medium.

### BACKGROUND

Traditional wireless communication adopts a cellular network communication mode, that is, a terminal and a network side device transmit uplink and downlink data/control information through a Uu interface. In order to extend network coverage, one solution is to introduce a relay from a user equipment (UE) to a network, namely a UE-to-network (U2N) relay. The U2N relay can be a terminal with relay function. For the U2N relay, the Uu interface is used between the relay (that is, a relay terminal) and the network, a direct communication interface is used between the relay and a relayed terminal (which can be called as a remote terminal), and the link between the relay and the network can be called as a backhaul link for the remote terminal.

After a relay scenario is introduced, in some cases (for example, the remote terminal is a wearable device, and the relay terminal is a mobile phone of a user of the wearable device), the remote terminal and the relay terminal always move together. Therefore, how to support the relay terminal and the remote terminal served by the relay terminal to perform group handover together has become an urgent problem that needs to be solved.

### SUMMARY

In order to solve problems in the related arts, embodiments of the present application provide methods and apparatuses for group handover, devices, and a storage medium.

An embodiment of the present application provides a method for group handover, applied to a source network device, including:
performing a handover decision; and
after determining to perform the group handover, transmitting a handover request message to a target network device, where the handover request message carries first indication information that indicates a terminal group.

In an embodiment, the first indication information includes one or more of the following:
a group identifier;
identification information of an intra-group relay terminal;
identification information of an intra-group remote terminal; and
user equipment (UE) context information corresponding to intra-group member terminals.

In an embodiment, the method further includes:
receiving a measurement report message from a terminal, and performing the handover decision based on the measurement report message.

In an embodiment, the method further includes:
receiving a measurement report result only from the intra-group relay terminal; or,
receiving a measurement report result from all or part of the intra-group member terminals.

In an embodiment, in case of receiving the measurement report result only from the intra-group relay terminal, the method further includes:
transmitting a measurement configuration only to the intra-group relay terminal; or,
transmitting a measurement configuration to all or part of the intra-group member terminals, and allowing only the intra-group relay terminal to perform measurement report.

In an embodiment, in case of receiving the measurement report result from all or part of the intra-group member terminals, the method further includes:
transmitting a measurement configuration to each intra-group member terminal that is required to perform the measurement report.

In an embodiment, the method further includes:
receiving the measurement report message transmitted from the intra-group relay terminal or the intra-group member terminal, where the measurement report message includes a measurement result from the intra-group relay terminal or the intra-group member terminals, and a measurement result from other intra-group member terminals.

In an embodiment, the measurement report message includes second indication information, where the second indication information is used for indicating a handover type that is expected to be performed, and the handover type includes group handover and single terminal handover.

In an embodiment, the handover request message further includes third indication information that changes intra-group relay terminal;
or,
the handover request message further includes a measurement result from the intra-group member terminals for a target cell.

In an embodiment, the method further includes:
after receiving a handover request acknowledgement message transmitted from the target network device, transmitting a radio resource control (RRC) reconfiguration message to intragroup relay terminals and other intra-group member terminals, respectively;
   or,
after receiving a handover request acknowledgement message transmitted from the target network device, notifying other intra-group member terminals of a new intra-group relay terminal through a source intra-group relay terminal in case that an intra-group relay terminal is changed.

An embodiment of the present application further provides a method for group handover, applied to a target network device, including:
receiving a handover request message transmitted from a source network device, where the handover request message carries first indication information that indicates a terminal group.

In an embodiment, after receiving the handover request message transmitted from the source network device, the method further includes any one of the following:
performing group admission decision to determine that all intra-group member terminals are admissible, transmitting a handover request acknowledgement message to the source network device;
performing group admission decision to determine that only part of intra-group member terminals are admissible, transmitting a handover request acknowledgement message to the source network device, where the handover request acknowledgement message includes fourth indication information, and the fourth indication information is used for indicating identification information of admissible intra-group member terminals; and
performing group admission decision to determine that only part of bearers of part of intra-group member terminals are admissible, transmitting a handover request acknowledgement message to the source network device, where the handover request acknowledgement message includes fifth indication information, and the fifth indication information is used for indicating identification information of admissible intra-group member terminals and information of admissible bearers of the admissible intra-group member terminals.

In an embodiment, the handover request message further includes a measurement result from intra-group member terminals for a target cell;
the method further includes:
changing intra-group relay terminal based on the measurement result.

In an embodiment, the handover request acknowledgement message includes sixth indication information that indicates a new intra-group relay terminal.

In an embodiment, the handover request acknowledgement message further includes one or more of the following:
configuration information of an end-to-end bearer between the intra-group member terminals and the target network device;
configuration information of a direct communication interface bearer between the intra-group member terminals and intra-group relay terminal;
configuration information of a Uu interface bearer between the intra-group relay terminal and the target network device;
a mapping relationship between a direct communication interface bearer, which is between the intra-group member terminals and the intra-group relay terminal, and an Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

An embodiment of the present application further provides a method for group handover, applied to a terminal, including:
transmitting a measurement report message to a source network device based on a received measurement configuration.

In an embodiment, in case that the measurement configuration only allows intra-group relay terminal to perform measurement report, the transmitting the measurement report message to the source network device includes:
in case that the terminal is an intra-group relay terminal, transmitting the measurement report message to the source network device.

In an embodiment, in case that the terminal is an intra-group relay terminal, the measurement report message includes a measurement result from the intra-group relay terminal and a measurement result from other intra-group member terminals;
or,
in case that the terminal is an intra-group remote terminal, the measurement report message includes a measurement result from the intra-group remote terminal and a measurement result from other intra-group member terminals.

In an embodiment, the measurement result from other intra-group member terminals is obtained through a direct communication interface periodic interaction or an event-triggered interaction, a trigger event includes one or more of the following:
a request from other intra-group member terminals; and
other intra-group member terminals measure that a signal quality of a neighboring cell is higher that a threshold.

In an embodiment, the measurement report message includes second indication information, where the second indication information is used for indicating a handover type that is expected to be performed, and the handover type includes group handover and single terminal handover.

In an embodiment, the method further includes:
receiving a radio resource control (RRC) reconfiguration message transmitted from the source network device;
   or,
in case that an intra-group relay terminal is changed, notifying, by a source intra-group relay terminal, other intra-group member terminals of a new intra-group relay terminal; and
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

In an embodiment, the method further includes:
in case that the terminal is an intra-group relay terminal, after completing random access to a target network device or transmitting a RRC (radio resource control) reconfiguration complete message to a target network device, transmitting seventh indication information to other intra-group member terminals, where the seventh indication information is used for indicating other intra-group member terminals to transmit the RRC reconfiguration complete message to the target network device through the intra-group relay terminal.

An embodiment of the present application further provides a source network device, including a memory, a transceiver and a processor, where
the memory is used to store a computer program;
the transceiver is used to transmit and receive data under control of the processor; and
the processor is used to read the computer program in the memory and perform steps of the above-mentioned method for group handover.

An embodiment of the present application further provides a target network device, including a memory, a transceiver and a processor, where
the memory is used to store a computer program;
the transceiver is used to transmit and receive data under control of the processor; and
the processor is used to read the computer program in the memory and perform steps of the above-mentioned method for group handover.

An embodiment of the present application further provides a terminal, including a memory, a transceiver and a processor, where
the memory is used to store a computer program;
the transceiver is used to transmit and receive data under control of the processor; and
the processor is used to read the computer program in the memory and perform steps of the above-mentioned method for group handover.

An embodiment of the present application further provides an apparatus for group handover, applied to a source network device, including:
a decision unit, used for performing a handover decision; and
a first transmitting unit, used for, after determining to perform the group handover, transmitting a handover request message to a target network device, where the handover request message carries first indication information that indicates a terminal group.

An embodiment of the present application further provides an apparatus for group handover, applied to a target network device, including:
a second receiving unit, used for receiving a handover request message transmitted from a source network device, where the handover request message carries first indication information that indicates a terminal group.

An embodiment of the present application further provides an apparatus for group handover, applied to a terminal, including:
a third transmitting unit, used for, transmitting a measurement report message to a source network device based on a received measurement configuration.

An embodiment of the present application provides a processor readable storage medium storing computer programs that, when executed by a processor, cause the processor to perform steps of the above-mentioned method for group handover.

In the methods and apparatuses for group handover, devices, and a storage medium provided by the embodiments of the present application, after performing the handover decision to determine to perform the group handover, the source network device can transmit the handover request message to the target network device. The handover request message carries the first indication information that indicates the terminal group, which supports the intra-group relay terminal and the intra-group remote terminal served by the intra-group relay terminal to perform group handover together, and the problem of group handover in the U2N relay communication is solved.

### BRIEF DESCRIPTION OF DRAWINGS

In order to illustrate the solutions of the embodiments according to the present application or the related art, the accompanying drawings used in the description of the embodiments or the related art are briefly introduced below. It should be noted that the drawings in the following description are only some embodiments of the present application. For those skilled in the art, other drawings may be obtained based on these drawings without creative effort.
FIG. 1 is a schematic diagram of a traditional method for conventional wireless communication according to the related art;
FIG. 2 is a schematic diagram of a method for device-to-device direct communication according to the related art;
FIG. 3 is a schematic diagram of a UE-to-network (U2N) relay according to the related art;
FIG. 4 is a first schematic flow diagram of a method for group handover according to an embodiment of the present application;
FIG. 5 is a second schematic flow diagram of a method for group handover according to an embodiment of the present application;
FIG. 6 is a third schematic flow diagram of a method for group handover according to an embodiment of the present application;
FIG. 7 is a fourth schematic flow diagram of a method for group handover according to an embodiment of the present application;
FIG. 8 is a fifth schematic flow diagram of a method for group handover according to an embodiment of the present application;
FIG. 9 is a schematic structural diagram of a source network device according to an embodiment of the present application;
FIG. 10 is a schematic structural diagram of a target network device according to an embodiment of the present application;
FIG. 11 is a schematic structural diagram of a terminal according to an embodiment of the present application;
FIG. 12 is a first schematic structural diagram of an apparatus for group handover according to an embodiment of the present application;
FIG. 13 is a second schematic structural diagram of an apparatus for group handover according to an embodiment of the present application; and
FIG. 14 is a third schematic structural diagram of an apparatus for group handover according to an embodiment of the present application.

### DETAILED DESCRIPTION OF THE EMBODIMENTS

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

In order to facilitate clearer understanding of each embodiment of the present application, some related background knowledge is introduced as follows.

### (1) Cellular network communication

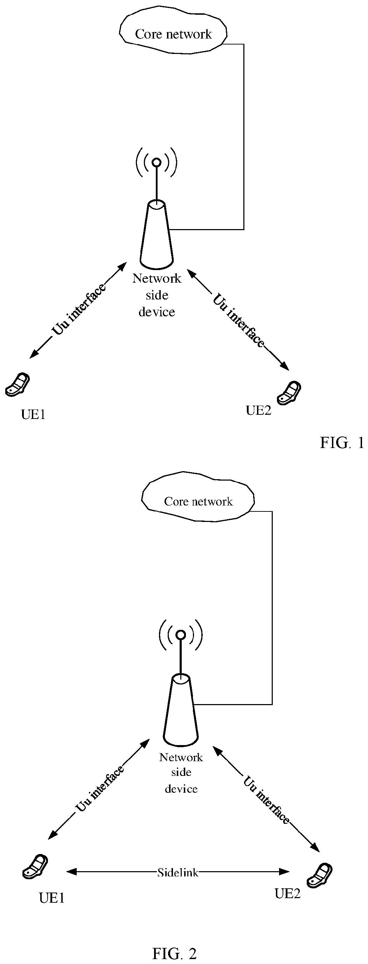

FIG. 1 is a schematic diagram of a method for traditional wireless communication according to the related art. As shown in FIG. 1, traditional wireless communication adopts a mode of cellular network communication, that is, a terminal and a network side device transmit uplink and downlink data/control information through a Uu interface.

### (2) Direct communication

FIG. 2 is a schematic diagram of a method for device-to-device direct communication according to the related art. As shown in FIG. 2, the direct communication indicates a method that a nearby terminal can transmit data within a short range through a direct communication link (which is also called as a sidelink or a proximity communication port 5 (PC5)). A wireless interface corresponding to the sidelink is called as a sidelink interface (which is also called as a direct communication interface or a PC5 interface).

### (3) Relay

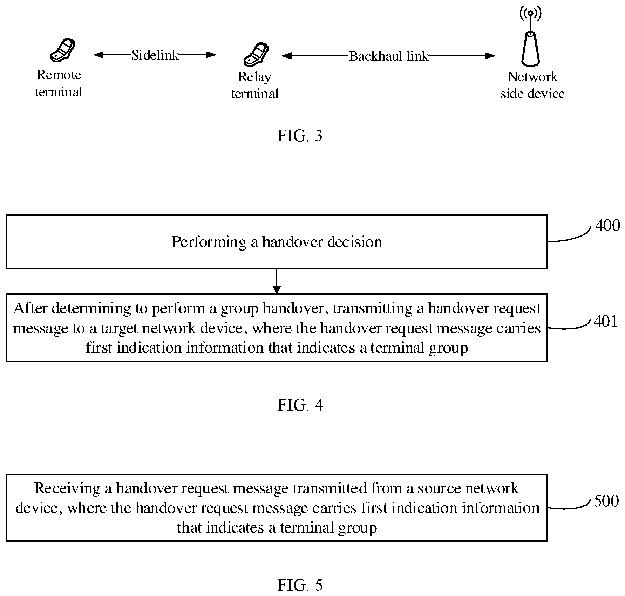

FIG. 3 is a schematic diagram of a UE-to-network (U2N) relay according to the related art. As shown in FIG. 3, in order to extend network coverage, one solution is to introduce a U2N relay. The U2N relay can be a terminal with relay function. For the U2N relay, a Uu interface is used between the relay (that is, a relay terminal) and the network, a direct communication interface is used between the relay and a relayed terminal (which can be called as a remote terminal), and the link between the relay and the network can be called as a backhaul link for the remote terminal.

Bearers in a relay scenario can be divided into the following three categories:
a direct communication interface bearer: that is, a bearer between the remote terminal and the relay terminal;
an end-to-end bearer between the remote terminal and a network device: that is, a bearer established between the remote terminal and the network device; and
a bearer of the remote terminal in the backhaul link of the Uu interface: that is, a bearer used for carrying remote terminal data between the relay terminal and the network device.

Connections in a relay scenario can be divided into the following two categories:
a direct connection: that is, a user equipment (UE) is directly connected to a network device; and
an indirect connection: that is, a UE is connected to the network device through a relay terminal.

Currently, there is no clear solution regarding a group handover in a scenario that a relay is introduced. The present application provides a solution that supports a relay terminal and a remote terminal served by the relay terminal to perform group handover together, which can solve the problem of group handover in a UE-to-network (U2N) relay communication.

FIG. 4 is a first schematic flow diagram of a method for group handover according to an embodiment of the present application. The method is applied to a source network device (such as a source base station). As shown in FIG. 4, the method includes the following steps.

Step 400: performing a handover decision.

In an embodiment, before performing a group handover, a source network device connected to a terminal performs the handover decision, for example, determines to perform the group handover or a single terminal handover, or determines to hand over the terminal from the source network device to which target network device (such as a target base station), etc. The specific manner of handover decision depends on the implementation of the source network device and is not limited herein.

Step 401: after determining to perform the group handover, transmitting a handover request message to the target network device, where the handover request message carries first indication information that indicates a terminal group.

In an embodiment, after performing the handover decision to determine to perform the group handover, the source network device can transmit the handover request message to the target network device. The handover request message carries the first indication information that indicates the terminal group.

In an embodiment, the first indication information may include one or more of the following:
a group identifier;
identification information of an intra-group relay terminal;
identification information of an intra-group remote terminal; and
user equipment (UE) context information corresponding to the intra-group member terminals.

It should be noted that, the intra-group member terminals in group communication include the intra-group relays terminal and the intra-group remote terminal. For example, one terminal group may include one intra-group relay terminal and one or more intra-group remote terminals. Further, one terminal group may include more than one intra-group relay terminals.

In the method for group handover according to an embodiment of the present application, after performing the handover decision to determine to perform the group handover, the source network device can transmit the handover request message to the target network device. The handover request message carries the first indication information that indicates the terminal group, which supports the intra-group relay terminal and the intra-group remote terminal served by the intra-group relay terminal to perform group handover together, and the problem of group handover in the U2N relay communication is solved.

In an embodiment, the method further includes:
receiving a measurement report message from the terminal, and performing the handover decision based on the measurement report message.

In an embodiment, the terminal can measure based on configuration from the source network device, and report a measurement result to the source network device in case that a measurement report trigger condition is satisfied. After receiving the measurement report message from the terminal, the source network device can perform the handover decision based on the measurement report message.

In the method according to an embodiment of the present application, the source network device can perform the handover decision based on the measurement report message from the terminal, which makes process of the handover decision more accurate, and may better support the intra-group relay terminal and the intra-group remote terminal served by the intra-group relay terminal to perform group handover together.

In an embodiment, the method further includes:
receiving a measurement report result only from intra-group relay terminal;
   or,
receiving a measurement report result from all or part of the intra-group member terminals.

In an embodiment, for the measurement report of group handover, only the intra-group relay terminal can perform measurement report, or all or part of the intra-group member terminals can perform measurement report.

The source network device may receive the measurement report result only from the intra-group relay terminal, or from all or part of the intra-group member terminals, which can be implemented by a measurement configuration transmitted from the source network device to the terminal.

In an embodiment, in case of receiving the measurement report result only from intra-group relay terminal, the method further includes:
transmitting a measurement configuration only to the intra-group relay terminal;
   or,
transmitting the measurement configuration to all or part of the intra-group member terminals, and allowing only intra-group relay terminal to perform measurement report.

In an embodiment, in case that the intra-group relay terminal is required to perform the measurement report, the source network device can only transmit the measurement configuration to the intra-group relay terminal, that is, the intra-group relay terminal only performs the measurement report based on the measurement configuration, without configuring the measurement report for the intra-group remote terminal. Once the intra-group relay terminal is changed, it need to be indicated to the source network device so that the source network device can change the measurement configuration.

The source network device can also transmit the measurement configuration to all or part of the intra-group member terminals, that is, the source network device configures measurement report for all or part of the intra-group member terminals. However, only the intra-group relay terminal is allowed to perform the measurement report. That is, if an intra-group member terminal is not a relay terminal, the measurement report is not allowed.

In an embodiment, in case that all or part of the intra-group member terminals perform the measurement report, the method further includes:
transmitting a measurement configuration to each intra-group member terminal that is required to perform the measurement report.

In an embodiment, in case that all or part of the intra-group member terminals perform the measurement report, the source network device can transmit the measurement configuration to each intra-group member terminal that is required to perform the measurement report, the intra-group member terminals can measure based on the configuration from the source network device. In case that the measurement report trigger condition is satisfied, the intra-group member terminals report the measurement result to the source network device.

In an embodiment, the method further includes:
receiving the measurement report message transmitted from the intra-group relay terminal or the intra-group member terminals, where the measurement report message includes a measurement result from the intra-group relay terminal or the intra-group member terminals, and the measurement result from other intra-group member terminals.

In an embodiment, when the source network device can configure that the intra-group relay terminal or the intra-group member terminals also need to report the measurement result from other member terminals when reporting its the measurement result, be ed. After receiving the measurement report message transmitted from the intra-group relay terminal or the intra-group member terminals, the source network device can perform the handover decision based on the measurement result from the intra-group relay terminal carried by the measurement report message, or the measurement result from the intra-group member terminals carried by the measurement report message, or the measurement result from the other intra-group member terminals carried by the measurement report message.

In an embodiment, the measurement result from other intra-group member terminals may be obtained by the intra-group relay terminal that performs measurement report through a direct communication interface, or may be obtained by the intra-group member terminals through a direct communication interface. The measurement result from other intra-group member terminals can be obtained through a direct communication interface periodic interaction or an event-triggered interaction. The trigger events may include one or more of the following:
a request from other intra-group member terminals; and
other intra-group member terminals measure that a signal quality of a neighboring cell is higher than a threshold.

In an embodiment, the measurement report message includes second indication information, where the second indication information is used for indicating a handover type that is expected to be performed, and the handover type includes group handover and single terminal handover.

In an embodiment, the terminal may carry the second indication information in the measurement report message. The second indication information is used for indicating the handover type that the terminal expects to perform. For example, the handover type that the terminal expects to perform may be group handover or single terminal handover. After receiving the measurement report message, the source network device may perform the handover decision based on the second indication information in the measurement report message.

In an embodiment, the handover request message further includes third indication information that changes the intra-group relay terminal; or,
the handover request message further includes the measurement result from a target cell by the intra-group member terminals.

In an embodiment, after receiving the measurement result from the intra-group relay terminal or the measurement result from the intra-group member terminals, and the measurement result from the other member terminals, the source network device may, based on the measurement result, determine to change the intra-group relay terminal, and include the third indication information that changes the intra-group relay terminal in the handover request message transmitted to the target network device. The third indication information may include identifier information of a current intra-group relay terminal and identifier information of a changed intra-group relay terminal expected by the source network device.

The source network device may also carry the measurement result of the intra-group member terminals for the target cell in the handover request message, and transmit it to the target network device. The target network device may determine whether to change the intra-group relay terminal based on the measurement result.

In an embodiment, the method further includes:
after receiving a handover request acknowledgement message transmitted from the target network device, transmitting a radio resource control (RRC) reconfiguration message to the intra-group relay terminal and other intra-group member terminals, respectively;
   or,
after receiving a handover request acknowledgement message transmitted from the target network device, notifying other intra-group member terminals of a new intra-group relay terminal through a source intra-group relay terminal in case that the intra-group relay terminal changes.

In an embodiment, after receiving the handover request message transmitted from the source network device, the target network device may perform a group admission decision and respond a handover request acknowledgement message to the source network device. After receiving the handover request acknowledgement message, the source network device may perform one or more of the following operations:
transmitting the RRC reconfiguration message to the intra-group relay terminal and other intra-group member terminals respectively, and triggering the intra-group relay terminal and other intra-group member terminals to initiate a handover process; and
in case that the intra-group relay terminal changes, the source network device may notify other intra-group member terminals of the new intra-group relay terminal through the source intra-group relay terminal.

After the source network device notifying other intra-group member terminals of the new intra-group relay terminal through the source intra-group relay terminal, the intra-group member terminals may release a direct communication connection with the source intra-group relay terminal and establish a direct communication connection with the new intra-group relay terminal.

In an embodiment, after completing random access to the target network device or transmitting a RRC reconfiguration complete message to the target network device, transmit indication information to the intra-group member terminals. The indication information is used for indicating that the intra-group member terminals may transmit the RRC reconfiguration complete message to the target network device through the intra-group relay terminal.

FIG. 5 is a second schematic flow diagram of a method for group handover according to an embodiment of the present application, the method is applied to a target network device (such as a target base station). As shown in FIG. 5, the method includes the following steps.

Step 500: receiving a handover request message transmitted from a source network device, where the handover request message carries first indication information that indicates a terminal group.

In an embodiment, after performing a group handover decision to determine to perform the group handover, the source network device (such as a source base station) may transmit a handover request message to a target network device. The handover request message carries the first indication information that indicates the terminal group. The target network device receives the handover request message transmitted from the source network device, and perform a group admission decision.

In an embodiment, the first indication information may include one or more of the following:
a group identifier;
identification information of an intra-group relay terminal;
identification information of an intra-group remote terminal; and
user equipment (UE) context information corresponding to intra-group member terminals.

In the method for group handover, after performing the handover decision to determine to perform the group handover, the source network device may transmit the handover request message to the target network device, where the handover request message carries the first indication information that indicates the terminal group, which supports the intra-group relay terminal and the intra-group remote terminal served by the intra-group relay terminal to perform the group handover together, and the problem of group handover in the U2N relay communication is solved.

In an embodiment, after receiving the handover request message transmitted from the source network device, the method further includes any one of the following:
performing group admission decision to determine that all intra-group member terminals are admissible, transmitting a handover request acknowledgement message to the source network device;
performing group admission decision to determine that only part of the intra-group member terminals are admissible, transmitting a handover request acknowledgement message to the source network device, where the handover request acknowledgement message includes fourth indication information, and the fourth indication information is used for indicating identification information of admissible intra-group member terminals; and
performing group admission decision to determine that only part of bearers of part of the intra-group member terminals are admissible, transmitting a handover request acknowledgement message to the source network device, where the handover request acknowledgement message includes fifth indication information, and the fifth indication information is used for indicating identification information of the admissible intra-group member terminals, and information of admissible bearers of the admissible intra-group member terminals.

In an embodiment, after receiving the handover request message transmitted from the source network device, the target network device may perform the group admission decision in one of the following modes:
only in case that the target network device determines that all the intra-group member terminals are admissible, the target network device responds the handover request acknowledgement message to the source network device;
in case that the target network device determines that only part of the intra-group member terminals are admissible, the target network device may respond the handover request acknowledgement message to the source network device, where the handover request acknowledgement message includes the fourth indication information, and the fourth indication information is used for indicating the identification information of the admissible intra-group member terminals (that is, are admissible by the target network device); and
in case that the target network device determines that only part bearers of part of the intra-group member terminals are admissible, the target network device may respond the handover request acknowledgement message to the source network device, where the handover request acknowledgement message includes the fifth indication information, and the fifth indication information is used for indicating identification information of the admissible intra-group member terminals, and bearer information of the admissible bearers of the admissible intra-group member terminals.

In an embodiment, the handover request acknowledgement message may include one or more of the following:
configuration information of an end-to-end bearer between the intra-group member terminals and the target network device;
configuration information of a direct communication interface bearer between the intra-group member terminals and the intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

In an embodiment, the handover request message further includes a measurement result of the intra-group member terminals for the target cell;
the method further includes:
changing the intra-group relay terminal based on the measurement result.

In an embodiment, the source network device may configure that the intra-group relay terminal or the intra-group member terminals also need to report the measurement result from other member terminals when reporting its the measurement result. After receiving the measurement report message transmitted from the intra-group relay terminal or the intra-group member terminals, the source network device may carry the measurement result from the intra-group member terminals for the target cell in the handover request message, and transmit the handover request message to the target network device, and the target network device may determine whether to change the intra-group relay terminal based on the measurement result.

In an embodiment, the handover request acknowledgement message further includes sixth indication information that indicates a new intra-group relay terminal.

In an embodiment, in case that the target network device changes the intra-group relay terminal, the handover request acknowledgement message transmitted from the target network device to the source network device may further include the sixth indication information that indicates the new intra-group relay terminal.

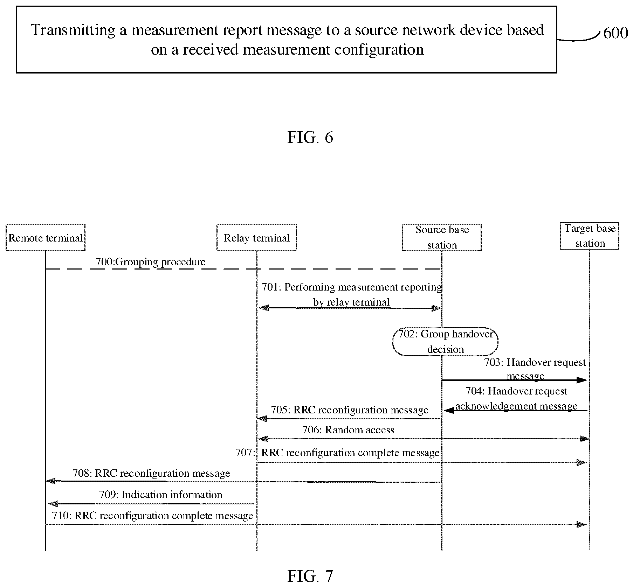

FIG. 6 is a third schematic flow diagram of a method for group handover according to an embodiment of the present application, the method is applied to a terminal. As shown in FIG. 6, the method includes the following steps.

Step 600: transmitting a measurement report message to a source network device based on a received measurement configuration.

In an embodiment, a terminal may be an intra-group relay terminal in group communication or an intra-group remote terminal in group communication. The terminal may perform measurement based on a configuration from the source network device. In case that a measurement report trigger condition is satisfied, the terminal transmits a measurement message to the source network device based on the measurement configuration. As such, after receiving the measurement report message transmitted from the terminal, the source network device may perform a handover decision based on the measurement report message.

In the method according to an embodiment of the present application, the source network device may perform the handover decision based on the measurement report message from the terminal, which makes process of the handover decision more accurate, and may better support the intra-group relay terminal and the intra-group remote terminal served by the intra-group relay terminal to perform group handover together.

In an embodiment, in case that the measurement configuration only allows the intra-group relay terminal to perform measurement report, the transmitting the measurement report message to the source network device includes:
in case that the terminal is the intra-group relay terminal, transmitting the measurement report message to the source network device.

In an embodiment, in case that the source network device only allows the intra-group relay terminal to perform measurement report, the source network device may transmit the measurement configuration only to the intra-group relay terminal, or may transmit the measurement configuration to all or part of the intra-group member terminals, and only allows the intra-group relay terminal to perform measurement report. As such, in case that the terminal is the intra-group relay terminal, the intra-group relay terminal transmits the measurement report message to the source network device.

In an embodiment, in case that the terminal is the intra-group relay terminal, the measurement report message includes a measurement result from the intra-group relay terminal and the measurement result from other intra-group member terminals; or,
in case that the terminal is the intra-group remote terminal, the measurement report message includes a measurement result from the intra-group remote terminal and the measurement result from other intra-group member terminals.

In an embodiment, the source network device may configure that the intra-group relay terminal or the intra-group remote terminal also needs to report the measurement result from other intra-group member terminals when reporting its measurement result. After receiving measurement report message transmitted from the intra-group relay terminal or the intra-group remote terminal, the source network device may perform the handover decision based on the measurement result from the intra-group relay terminal or the measurement result from the intra-group remote terminal, and the measurement result from other intra-group member terminals, which are carried in the measurement report message.

In an embodiment, the measurement result from other intra-group member terminals can be obtained through a direct communication interface periodic interaction or an event-triggered interaction. The trigger event may include one or more of the following:
a request from other intra-group member terminals;
other intra-group member terminals measure that a signal quality of a neighboring cell is higher that a threshold.

In an embodiment, the measurement report message includes second indication information, where the second indication information is used for indicating a handover type that is expected to be performed, and the handover type includes group handover and single terminal handover.

In an embodiment, the terminal may carry the second indication information in the measurement report message. The second indication information is used for indicating the handover type that the terminal expects to perform. For example, the handover type that the terminal expects to perform may be the group handover or the single terminal handover. After receiving the measurement report message, the source network device may perform the handover decision based on the second indication information carried in the measurement report message.

In an embodiment, the method further includes:
receiving a radio resource control (RRC) reconfiguration message transmitted from the source network device;
   or,
in case that the intra-group relay terminal is changed, notifying, by a source intra-group relay terminal, other intra-group member terminals of a new intra-group relay terminal; and
in case that the intra-group relay terminal is changed, receiving the new intra-group relay terminal the source intra-group relay terminal, releasing a direct communication connection with the source intra-group relay terminal, and establishing a direct communication connection with the new intra-group relay terminal.

In an embodiment, after receiving a handover request message transmitted from the source network device, a target network device may perform a group admission decision, and respond a handover request acknowledgement message to the source network device. After receiving the handover request acknowledgement message, the source network device may perform one or more of the following operations:
transmitting the RRC reconfiguration message to the intra-group relay terminal and other intra-group member terminals respectively, and triggering the intra-group relay terminal and other intra-group member terminals to initiate a handover process; and
in case that the intra-group relay terminal is changed, the source network device may notify other intra-group member terminals of the new intra-group relay terminal through the source intra-group relay terminal.

After the source network device notifies other intra-group member terminals of the new intra-group relay terminal through the source intra-group relay terminal, the intra-group member terminals may release the direct communication connection with the source intra-group relay terminal, and establish the direct connection with the new intra-group relay terminal.

In an embodiment, the method further includes:
in case that the terminal is the intra-group relay terminal, after completing random access to the target network device or transmitting a RRC reconfiguration complete message to the target network device, transmitting seventh indication information to other intra-group member terminals, where the seventh indication information is used for indicating other intra-group member terminals to transmit the RRC reconfiguration complete message to the target network device through the intra-group relay terminal.

In an embodiment, after completing random access to the target network device or transmitting the RRC reconfiguration complete message to the target network device, the intra-group relay terminal may transmit the seventh indication information to the intra-group member terminals. The seventh indication information is used for indicating that the intra-group member terminal may transmit the RRC reconfiguration complete message to the target network device through the intra-group relay terminal.

FIG. 7 is a fourth schematic flow diagram of a method for group handover according to an embodiment of the present application. As shown in FIG. 7, a source network device in the embodiment is a source base station, a target network device is a target base station. The method includes the following steps.

Step 700: a grouping procedure.

In an embodiment, the grouping procedure can adopt a traditional high-layer grouping procedure, or adopt a new grouping procedure, which is not limited herein.

Step 701: performing a measurement report by a relay terminal.

In an embodiment, the relay terminal performs measurement based on a configuration from the source network device, and reports a measurement result to the source network device when a measurement report trigger condition is satisfied.

In this embodiment, only an intra-group relay terminal need to perform the measurement report, which may be implemented by one of the following modes:
the source network device configures the measurement report only for the intra-group relay terminal, and does not need to configure the measurement report for the intra-group remote terminal, in case that the intra-group relay terminal is changed, the change is indicated to the source network device and the source network device changes a measurement configuration; and
the source network device may configure the measurement report for every intra-group member terminal, and measurement report is disabled in case that the terminal is not the intra-group relay terminal.

In an embodiment, the relay terminal may carry indication information in the measurement report. The indication information is used for indicating that the relay terminals expect to perform whether a group handover or a relay terminal handover.

Step 702: the source network device performs a handover decision.

In an embodiment, after receiving the measurement report from the relay terminals, in case that the measurement report indicates group handover, the source network device performs the group handover decision. How to determine a target cell depends on implementation of the source network device.

Step 703: the source network device transmits a handover request message to the target network device.

In an embodiment, the source network device performs the handover decision, in case that the group handover is performed, the source network device needs to transmit the handover request message to the target network device, the handover request message at least carries one or more of the following:
a group identifier;
identification information of an intra-group relay terminal;
identification information of an intra-group remote terminal; and
user equipment (UE) context information corresponding to intra-group member terminals.

Step 704: the target network device transmits a handover request acknowledgement message to the source network device.

In an embodiment, the target network device performs a group admission decision, which may be performed by one of the following modes:
only in case that the target network device is able to admit all the intra-group member terminals, it is allowed to respond the handover request acknowledgement message to the source network device;
the target network device is allowed to admit only part of the intra-group member terminals, and when responding the handover request acknowledgement massage to the source network device, the target network device needs to indicate identification information of intra-group member terminals that are admissible; and
the target network device is allowed to admit part of bearers of part of the intra-group member terminals, and when responding the handover request acknowledgement massage to the source network device, the target network device needs to indicate identification information of intra-group member terminals that are admissible need to be indicated, and admissible bearer information of the intra-group member terminals.

Except for the above-mentioned content, the handover request acknowledgement message further includes one or more of the following:
configuration information of an end-to-end bearer between the intra-group member terminals and the target network device;
configuration information of a direct communication interface bearer between the intra-group member terminals and the intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and the end-to-end bearer, which is between the intra-group member terminals and the target network device.

Step 705: the source network device performs a radio resource control (RRC) reconfiguration on the relay terminal.

In an embodiment, the source network device transmits the RRC reconfiguration message to the relay terminal, and triggers the relay terminal to initiate a handover process.

Step 706: the relay terminal initiates a random access procedure to the target network device.

Step 707: the relay terminal transmits a RRC reconfiguration complete massage to the target network device.

Step 708: the source network device performs a RRC reconfiguration to other intra-group member terminals.

In an embodiment, the above-mentioned steps 708, 705, 706 and 707 are not sequential, and can be performed in parallel.

In an embodiment, for an end-to-end bearer that is not admissible by the target network device, a corresponding intra-group member terminal need to release the end-to-end bearer, and release a corresponding direct communication interface bearer.

Step 709: the relay terminal transmits indication information to other intra-group member terminals.

In an embodiment, after completing random access to the target network device or transmitting a RRC reconfiguration complete message to the target network device, the relay terminal transmits the indication information to other intra-group member terminals. The indication information is used for indicating that other intra-group member terminals are able to transmit the RRC reconfiguration complete message to the target network device through the relay terminal.

Step 710: the intra-group member terminals transmit the RRC reconfiguration complete message to the target network device through the relay terminal.

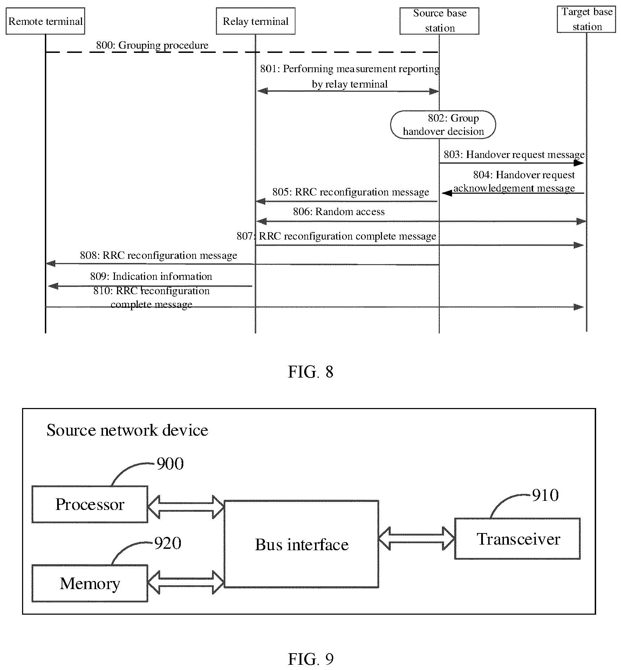

FIG. 8 is a fifth schematic flow diagram of a method for group handover according to an embodiment of the present application. As shown in FIG. 8, a source network device in the embodiment is a source base station, a target network device is a target base station. The method includes the following step.

Step 800: a grouping procedure.

In an embodiment, the grouping procedure can adopt a traditional high-layer grouping procedure, or adopt a new grouping procedure, which is not limited herein.

Step 801: performing a measurement report by a relay terminal or performing a measurement report by intra-group member terminals.

In an embodiment, taking the measurement reporting by the relay terminal as an example, the relay terminal performs measurement based on a configuration from the source network device, and reports a measurement result to the source network device when a measurement report trigger condition is satisfied.

In an embodiment, the relay terminals may a support additional measurement report, that is, when reporting the measurement result to network device, the relay terminal needs to carry a measurement result from other intra-group member terminals. The measurement result from other intra-group member terminals can be obtained by a direct communication interface periodic interaction or an event-triggered interaction. The trigger event may be, but not limited to, one of the following:
a request from other intra-group member terminals; and
other intra-group member terminals measure that a signal quality of a neighboring cell is higher that a threshold.

In an embodiment, the relay terminal may carry indication information in the measurement report, which indicates that the relay terminal expects to perform whether a group handover or a relay terminal handover.

Step 802: the source network device performs a handover decision.

In an embodiment, after receiving the measurement report from the relay terminals, in case that the measurement report indicates group handover, the source network device performs the group handover decision. How to determine a target cell depends on implementation of the source network device.

In an embodiment, in this step, the source network device is allowed to change the intra-group relay terminal when transmitting the handover request to the target network device.

Step 803: the source network device transmits a handover request message to the target network device.

In an embodiment, the source network device performs the handover decision, in case that the group handover is performed, the source network device need to transmit the handover request message to the target network device, the handover request message at least carries one or more of the following:
a group identifier;
identification information of an intra-group relay terminal;
identification information of an intra-group remote terminal; and
user equipment (UE) context information corresponding to intra-group member terminals.

In an embodiment, when transmitting the handover request message to the target network device, the source network device may carry the measurement result from the intra-group member terminals for a target cell in the handover request message. The target network device may change the intra-group relay terminal based on the measurement result.

Step 804: the target network device transmits a handover request acknowledgement message to the source network device.

In an embodiment, the target network device performs a group admission decision, which may be performed by one of the following modes:
only in case that the target network device is able to admit all the intra-group member terminals, it is allowed to respond the handover request acknowledgement message to the source network device;
the target network device is allowed to admit only part of the intra-group member terminals, and when responding the handover request acknowledgement massage to the source network device, the target network device needs to indicate identification information of intra-group member terminals that are admissible; and
the target network device is allowed to admit part of bearers of part of the intra-group member terminals, and when responding the handover request acknowledgement massage to the source network device, the target network device needs to indicate identification information of intra-group member terminals that are admissible need to be indicated, and admissible bearer information of the intra-group member terminals.

Except for the above-mentioned content, the handover request acknowledgement message further includes one or more of the following:
configuration information of an end-to-end bearer between the intra-group member terminals and the target network device;
configuration information of a direct communication interface bearer between the intra-group member terminals and the intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

Step 805: the source network device performs a radio resource control (RRC) reconfiguration on the relay terminal selected by the target network device.

In an embodiment, the source network device transmits the RRC reconfiguration message to the relay terminals selected by the target network device, and triggers the relay terminals to initiate a handover process.

In case that the relay terminal selected by the target network device is different from a source relay terminal, that is, the relay terminal is changed, the source network device notifies other intra-group member terminals of a new relay terminal through the source relay terminal; and
the intra-group member terminals release a direct communication connection with the source relay terminal and establish a direct communication connection with the new relay terminal.

Step 806: the relay terminals selected by the target network device initiates a random access procedure to the target network device.

Step 807: the relay terminal selected by the target network device transmits a radio resource control (RRC) reconfiguration complete massage to the target network device.

Step 808: the source network device performs a RRC reconfiguration to other intra-group member terminals.

In an embodiment, the above-mentioned steps 808, 805, 806 and 807 are not sequential, and can be performed in parallel.

In an embodiment, for an end-to-end bearer that is not admissible by the target network device, a corresponding intra-group member terminal need to release the end-to-end bearer, and release a corresponding direct communication interface bearer.

Step 809: the relay terminals selected by the target network device transmits indication information to other intra-group member terminals.

In an embodiment, after completing random access to the target network device or transmitting a RRC reconfiguration complete message to the target network device, the relay terminal selected by the target network device transmits the indication information to other intra-group member terminals. The indication information is used for indicating that other intra-group member terminals are able to transmit the RRC reconfiguration complete message to the target network device through the relay terminal.

Step 810: the intra-group member terminals transmit the RRC reconfiguration complete message to the target network device through the relay terminal selected by the target network device.

The methods and apparatuses according to the embodiments of the present application are based on the same concept. Since the principle of the methods and the apparatuses for solving the problem is similar, the implementation of the methods and the apparatuses can refer to each other, which is not repeated herein.

FIG. 9 is a schematic structural diagram of a source network device according to an embodiment of the present application. As shown in FIG. 9, the source network device includes a memory 920, a transceiver 910 and a processor 900. The processor 900 and the memory 920 may be physically separated.

The memory 920 is used for storing computer programs; and the transceiver 910 is used for transmitting and receiving data under control of the processor 900.

In an embodiment, the transceiver 910 is used for transmitting and receiving data under control of the processor 900.

In FIG. 9, a bus architecture may include any number of interconnected buses and bridges, linked together by various circuits of one or more processors represented by processor 900 and circuits of memories represented by memory 920. The bus architecture may also link various other circuits such as peripheral devices, regulators and power management circuits, which are appreciated by those skilled in the art and not further described in the present application. The bus architecture provides an interface. The transceiver 910 may be multiple components, that is, including a transmitter and a receiver, providing units for communication with various other devices on transmission media such as wireless channels, wired channels, optical fibers, etc.

The processor 900 is used for managing the bus architecture and general processing. The memory 920 may store data used by the processor 900 in case of performing operations.

The processor 900 may be a central processing unit (CPU), an application specific integrated circuit (ASIC), a field-programmable gate array (FPGA), or a complex programmable logic device (CPLD). The processor may also adopt a multi-core architecture.

Computer programs stored in the memory 920, when executed by the processor 900, cause the source network device to perform any of the methods provided by the embodiments in the present application based on obtained executable instructions. For example, the method includes: performing a handover decision; after determining to perform the group handover, transmitting a handover request message to the target network device, where the handover request message carries first indication information that indicates a terminal group.

In an embodiment, the first indication information includes one or more of the following:
a group identifier;
identification information of an intra-group relay terminal;
identification information of an intra-group remote terminal; and
user equipment (UE) context information corresponding to intra-group member terminals.

In an embodiment, the method further includes:
receiving a measurement report message from a terminal, and performing the handover decision based on the measurement report message.

In an embodiment, the method further includes:
receiving a measurement report result only from the intra-group relay terminal;
   or,
receiving a measurement report result from all or part of the intra-group member terminals.

In an embodiment, in case of receiving the measurement report result only from the intra-group relay terminal, the method further includes:
transmitting a measurement configuration only to the intra-group relay terminal;
   or,
transmitting a measurement configuration to all or part of the intra-group member terminals, and allowing only the intra-group relay terminal to perform measurement report.

In an embodiment, in case of receiving the measurement report result from all or part of the intra-group member terminals, the method further includes:
transmitting a measurement configuration to each intra-group member terminal that is required to perform the measurement report.

In an embodiment, the method further includes:
receiving the measurement report message transmitted from the intra-group relay terminal or the intra-group member terminals, where the measurement report message includes a measurement result from the intra-group relay terminal or the intra-group member terminals, and a measurement result from other intra-group member terminals.

In an embodiment, the measurement report message includes second indication information, where the second indication information is used for indicating a handover type that is expected to be performed, and the handover type includes group handover and single terminal handover.

In an embodiment, the handover request message further includes third indication information that changes the intra-group relay terminal;
or,
the handover request message further includes the measurement result from the intra-group member terminals for a target cell.

In an embodiment, the method further includes:
after receiving a handover request acknowledgement message transmitted from the target network device, transmitting a radio resource control (RRC) reconfiguration message to the intra-group relay terminal and other intra-group member terminals, respectively;
   or,
after receiving a handover request acknowledgement message transmitted from the target network device, notifying other intra-group member terminals of a new intra-group relay terminal through a source intra-group relay terminal in case that the intra-group relay terminal is changed.

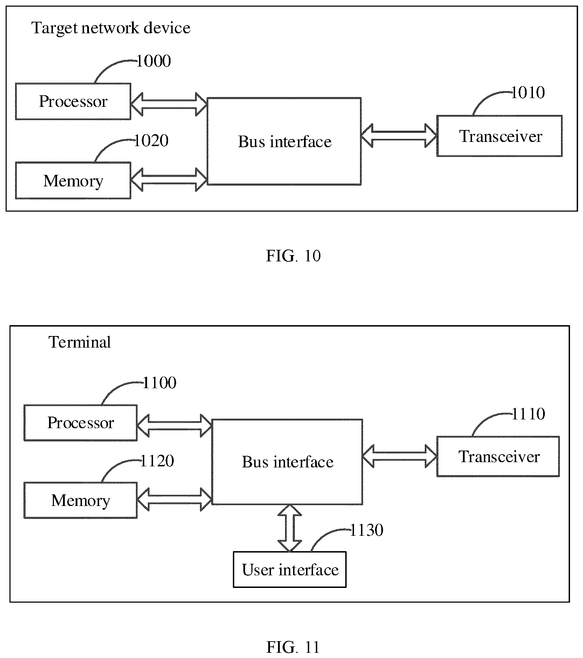

FIG. 10 is a schematic structural diagram of a target network device according to an embodiment of the present application. As shown in FIG. 10, the target network device includes a memory 1020, a transceiver 1010 and a processor 1000. The processor 1000 and the memory 1020 may be physically separated.

The memory 1020 is used for storing computer programs; and the transceiver 1010 is used for transmitting and receiving data under control of the processor 1000.

In an embodiment, the transceiver 1010 is used for transmitting and receiving data under control of the processor 1000.

In FIG. 10, a bus architecture may include any number of interconnected buses and bridges, linked together by various circuits of one or more processors represented by processor 1000 and circuits of memories represented by memory 1020. The bus architecture may also link various other circuits such as peripheral devices, regulators and power management circuits, which are appreciated by those skilled in the art and not further described in the present application. The bus architecture provides an interface. The transceiver 1010 may be multiple components, that is, including a transmitter and a receiver, providing units for communication with various other devices on transmission media such as wireless channels, wired channels, optical fibers, etc.

The processor 1000 is used for managing the bus architecture and general processing. The memory 1020 may store data used by the processor 1000 in case of performing operations.

The processor 1000 may be a central processing unit (CPU), an application specific integrated circuit (ASIC), a field-programmable gate array (FPGA), or a complex programmable logic device (CPLD). The processor may also adopt a multi-core architecture.

Computer programs stored in the memory 1020, when executed by the processor 1000, cause the target network device to perform any of the method provided by the embodiments in the present application based on obtained executable instructions. For example, the method includes: receiving a handover request message transmitted from a source network device, where the handover request message carries first indication information that indicates a terminal group.

In an embodiment, after receiving the handover request message transmitted from the source network device, the method further includes any one of the following:
performing group admission decision to determine that all intra-group member terminals are admissible, transmitting a handover request acknowledgement message to the source network device;
performing group admission decision to determine that only part of the intra-group member terminals are admissible, transmitting a handover request acknowledgement message to the source network device, where the handover request acknowledgement message includes fourth indication information, and the fourth indication information is used for indicating identification information of admissible intra-group member terminals; and
performing group admission decision to determine that only part of bearers of part of the intra-group member terminals are admissible, transmitting a handover request acknowledgement message to the source network device, where the handover request acknowledgement message includes fifth indication information, and the fifth indication information is used for indicating identification information of the admissible intra-group member terminals, and information of the admissible bearer of the admissible intra-group member terminals.

In an embodiment, the handover request message further includes a measurement result from intra-group member terminals for a target cell;
the method further includes:
changing an intra-group relay terminal based on the measurement result.

In an embodiment, the handover request acknowledgement message includes sixth indication information that indicates a new intra-group relay terminal.

In an embodiment, the handover request acknowledgement message may include one or more of the following:
configuration information of an end-to-end bearer between the intra-group member terminals and the target network device;
configuration information of a direct communication interface bearer between the intra-group member terminals and the intra-group relay terminal;
configuration information of a Uu interface bearer between the intra-group relay terminal and the target network device;
a mapping relationship between a direct communication interface bearer, which is between the intra-group member terminals and the intra-group relay terminal, and an Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

FIG. 11 is a schematic structural diagram of a terminal according to an embodiment of the present application. As shown in FIG. 11, the terminal includes a memory 1120, a transceiver 1110 and a processor 1100. The processor 1100 and the memory 1120 may be physically separated.

The memory 1120 is used for storing computer programs; the transceiver 1110 is used for transmitting and receiving data under control of the processor 1100.

In an embodiment, the transceiver 1110 is used for transmitting and receiving data under control of the processor 1100.

In FIG. 11, a bus architecture may include any number of interconnected buses and bridges, linked together by various circuits of one or more processors represented by processor 1100 and circuits of memories represented by memory 1120. The bus architecture may also link various other circuits such as peripheral devices, regulators and power management circuits, which are appreciated by those skilled in the art and not further described in the present application. The bus architecture provides an interface. The transceiver 1110 may be multiple components, that is, including a transmitter and a receiver, providing units for communication with various other devices on transmission media such as wireless channels, wired channels, optical fibers, etc. For different user devices, the user interface 1130 may also be an interface capable of connecting external and internal devices, including but not limited to small keyboards, displays, speakers, microphones, joysticks, etc.

The processor 1100 is used for managing the bus architecture and general processing. The memory 1120 may store data used by the processor 1100 in case of performing operations.

The processor 1100 may be a central processing unit (CPU), an application specific integrated circuit (ASIC), a field-programmable gate array (FPGA), or a complex programmable logic device (CPLD). The processor may also adopt a multi-core architecture.

Computer programs stored in the memory 1120, when executed by the processor 1100, cause the terminal to perform any of the method provided by the embodiments in the present application based on obtained executable instructions. For example, the method includes: transmitting a measurement report message to a source network device based on a received measurement configuration.

In an embodiment, in case that the measurement configuration only allows the intra-group relay terminal to perform measurement report, the transmitting the measurement report message to the source network device includes:
in case that the terminal is an intra-group relay terminal, transmitting the measurement report message to the source network device.

In an embodiment, in case that the terminal is an intra-group relay terminal, the measurement report message includes a measurement result from the intra-group relay terminal and the measurement result from other intra-group member terminals; or,
in case that the terminal is an intra-group remote terminal, the measurement report message includes a measurement result from the intra-group remote terminal and a measurement result from other intra-group member terminals.

In an embodiment, the measurement result from other intra-group member terminals can be obtained through a direct communication interface periodic interaction or an event-triggered interaction. The trigger event may include one or more of the following:
a request from other intra-group member terminals; and
other intra-group member terminals measure that a signal quality of a neighboring cell is higher that a threshold.

In an embodiment, the measurement report message includes second indication information, where the second indication information is used for indicating a handover type that is expected to be performed, and the handover type includes group handover and single terminal handover.

In an embodiment, the method further includes:
receiving a radio resource control (RRC) reconfiguration message transmitted from the source network device;
   or,
in case that an intra-group relay terminal is changed, notifying, by a source intra-group relay terminal, other intra-group member terminals of a new intra-group relay terminal; and
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

In an embodiment, the method further includes:
in case that the terminal is an intra-group relay terminal, after completing random access to the target network device or transmitting a RRC (radio resource control) reconfiguration complete message to the target network device, transmitting seventh indication information to other intra-group member terminals, where the seventh indication information is used for indicating other intra-group member terminals to transmit the RRC reconfiguration complete message to the target network device through the intra-group relay terminal.

It should be noted that the source network device, the target network device and the terminal in the embodiments of the present application can implement all the methods provided by the above-mentioned embodiments and achieve the same effect. The same parts and beneficial effects as the method embodiments are not repeated herein.

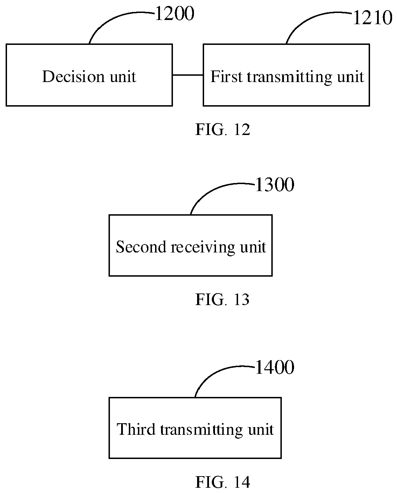

FIG. 12 is a first schematic structural diagram of an apparatus for group handover according to an embodiment of the present application, the apparatus is applied to a source network device. As shown in FIG. 12, the apparatus includes:
a decision unit 1200, used for performing a handover decision;
a first transmitting unit 1210, used for, after determining to perform the group handover, transmitting a handover request message to the target network device, where the handover request message carries first indication information that indicates a terminal group.

In an embodiment, the first indication information includes one or more of the following:
a group identifier;
identification information of an intra-group relay terminal;
identification information of an intra-group remote terminal; and
user equipment (UE) context information corresponding to intra-group member terminals.

In an embodiment, the decision unit 1200 is further used for:
receiving a measurement report message from a terminal, and performing the handover decision based on the measurement report message.

In an embodiment, the decision unit 1200 is further used for:
receiving a measurement report result only from the intra-group relay terminal;
   or,
receiving a measurement report result from all or part of the intra-group member terminals.

In an embodiment, in case of receiving the measurement report result only from the intra-group relay terminal, the first transmitting unit 1210 is further used for:
transmitting a measurement configuration only to the intra-group relay terminal;
   or,
transmitting a measurement configuration to all or part of the intra-group member terminals, and allowing only the intra-group relay terminal to perform measurement report.

In an embodiment, in case of receiving the measurement report result from all or part of the intra-group member terminals, the first transmitting unit 1210 is further used for:
transmitting a measurement configuration to each intra-group member terminal that is required to perform the measurement report.

In an embodiment, the decision unit 1200 is further used for:
receiving the measurement report message transmitted from the intra-group relay terminal or the intra-group member terminals, where the measurement report message includes a measurement result from the intra-group relay terminal or the intra-group member terminals, and a measurement result from other intra-group member terminals.

In an embodiment, the measurement report message includes second indication information, where the second indication information is used for indicating a handover type that is expected to be performed, and the handover type includes group handover and single terminal handover.

In an embodiment, the handover request message further includes third indication information that changes the intra-group relay terminal;
or,
the handover request message further includes the measurement result from the intra-group member terminals for a target cell.

In an embodiment, the first transmitting unit 1210 is further used for:
after receiving a handover request acknowledgement message transmitted from the target network device, transmitting a radio resource control (RRC) reconfiguration message to the intra-group relay terminal and other intra-group member terminals, respectively;
   or,
after receiving a handover request acknowledgement message transmitted from the target network device, notifying other intra-group member terminals of a new intra-group relay terminal through a source intra-group relay terminal in case that the intra-group relay terminal is changed.

FIG. 13 is a second schematic structural diagram of an apparatus for group handover according to an embodiment of the present application, the apparatus is applied to a target network device. As shown in FIG. 13, the apparatus includes:
a second receiving unit 1300, used for receiving a handover request message transmitted from a source network device, where the handover request message carries first indication information that indicates a terminal group.

In an embodiment, the apparatus further includes:
a second transmitting unit 1310, used for:
performing group admission decision to determine that all intra-group member terminals are admissible, transmitting a handover request acknowledgement message to the source network device;
performing group admission decision to determine that only part of the intra-group member terminals are admissible, transmitting a handover request acknowledgement message to the source network device, where the handover request acknowledgement message includes fourth indication information, and the fourth indication information is used for indicating identification information of admissible intra-group member terminals; and
performing group admission decision to determine that only part of bearers of part of the intra-group member terminals are admissible, transmitting a handover request acknowledgement message to the source network device, where the handover request acknowledgement message includes fifth indication information, and the fifth indication information is used for indicating identification information of the admissible intra-group member terminals, and information of the admissible bearer of the admissible intra-group member terminals.

In an embodiment, the handover request message further includes a measurement result from intra-group member terminals for a target cell;
the apparatus further includes:
a changing unit 1320, used for changing an intra-group relay terminal based on the measurement result.

In an embodiment, the handover request acknowledgement message includes sixth indication information that indicates a new intra-group relay terminal.

In an embodiment, the handover request acknowledgement message may include one or more of the following:
configuration information of an end-to-end bearer between the intra-group member terminals and the target network device;
configuration information of a direct communication interface bearer between the intra-group member terminals and the intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

FIG. 14 is a third schematic structural diagram of an apparatus for group handover according to an embodiment of the present application, the apparatus is applied to a terminal. As shown in FIG. 14, the apparatus includes:
a third transmitting unit 1400, used for transmitting a measurement report message to a source network device based on a received measurement configuration.

In an embodiment, in case that the measurement configuration only allows an intra-group relay terminal to perform measurement report, the third transmitting unit 1400 is used for:
in case that the terminal is an intra-group relay terminal, transmitting the measurement report message to the source network device.

In an embodiment, in case that the terminal is the intra-group relay terminal, the measurement report message includes a measurement result from the intra-group relay terminal and the measurement result from other intra-group member terminals; or,
in case that the terminal is an intra-group remote terminal, the measurement report message includes a measurement result from the intra-group remote terminal and the measurement result from other intra-group member terminals.

In an embodiment, the measurement result from other intra-group member terminals can be obtained through a direct communication interface periodic interaction or an event-triggered interaction. The trigger event may include one or more of the following:
a request from other intra-group member terminals; and
other intra-group member terminals measure that a signal quality of a neighboring cell is higher that a threshold.

In an embodiment, the measurement report message includes second indication information, where the second indication information is used for indicating a handover type that is expected to be performed, and the handover type includes group handover and single terminal handover.

In an embodiment, the apparatus further includes:
a third receiving unit 1410, used for receiving a radio resource control (RRC) reconfiguration message transmitted from the source network device;
   or,
in case that the intra-group relay terminal is changed, notifying, by a source intra-group relay terminal, other intra-group member terminals of a new intra-group relay terminal;
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

In an embodiment, the third transmitting unit 1400 is further used for:
in case that the terminal is an intra-group relay terminal, after completing random access to the target network device or transmitting a RRC (radio resource control) reconfiguration complete message to the target network device, transmitting a seventh indication information to other intra-group member terminals, where the seventh indication information is used for indicating other intra-group member terminals to transmit the RRC reconfiguration complete message to the target network device through the intra-group relay terminal.

It should be noted that, the division of units in the embodiments of the present application is schematic, and is only a logical function division, and there can be other division manners in actual implementation. In an embodiment, the functional units in the various embodiments of the present application can be integrated into one processing unit, or each unit can exist alone physically, or two or more units can be integrated into one unit. The aforementioned integrated unit can be implemented in the form of hardware or software functional unit.

In the case that the integrated unit is implemented in the form of a software functional unit and sold or used as an independent product, it can be stored in a processor readable storage medium. Based on such understanding, the solutions of the present application in essence or a part of the solutions that contributes to the related art, or all or part of the solutions, can be embodied in the form of a software product, which is stored in a storage medium, including several instructions to cause a computer device (which can be a personal computer, server, or network device, etc.) or a processor to perform all or part of the steps of the methods described in the respective embodiments of the present application. The storage medium described above includes various media that can store program codes, such as USB flash disk, mobile hard disk, read-only memory (ROM), random access memory (RAM), magnetic disk, or optical disk.

It should be noted that the above-mentioned apparatus in the embodiments of the present application can implement all the methods provided by the above-mentioned embodiments and achieve the same effect. The same parts and beneficial effects as the method embodiments are not repeated herein.

An embodiment of the present application further provides a processor readable storage medium storing a computer program that causes, when executed by a processor, the processor to perform the group handover method provided by the above embodiments, including: performing a handover decision; and after determining to perform the group handover, transmitting a handover request message to the target network device, where the handover request message carries first indication information that indicates a terminal group.

An embodiment of the present application further provides a processor readable storage medium storing a computer program that causes, when executed by a processor, the processor to perform the group handover method provided by the above embodiments, including: receiving a handover request message transmitted from a source network device, where the handover request message carries first indication information that indicates a terminal group.

An embodiment of the present application further provides a processor readable storage medium storing a computer program that causes, when executed by a processor, the processor to perform the group handover method provided by the above embodiments, including: transmitting a measurement report message to a source network device based on a received measurement configuration.

The processor readable storage medium can be any available medium or data storage device that can be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application can be applicable to various systems, for example, 5G systems. For example, the applicable systems can be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and can further include a core network part, such as an evolved packet system (EPS), a 5G system (5GS), and the like.

The network device in the embodiments of the present application can be a base station, and the base station can include multiple cells providing services for the terminal. Depending on the specific scenario, the base station may be called an access point, or a device communicating with a wireless terminal device through one or more sectors on the air interface in the access network, or other names. The network device can be used for exchanging received air frames with internet protocol (IP) packets, and acting as a router between the wireless terminal device and the rest of the access network, where the rest of the access network can include an IP communication network. The network device can also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional node B (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

The terminal device in the embodiments of the present application can be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device can communicate with one or more core networks (CNs) via a radio access network (RAN), and the wireless terminal can be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

A multi-input multi-output (MIMO) transmission may be performed between the network device and the terminal by using one or more antennas. The MIMO transmission may be single-user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by processor-executable instructions. These processor-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may be stored in processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

## Claims

1. A method for group handover, applied to a source network device, comprising:
performing a handover decision; and
after determining to perform the group handover, transmitting a handover request message to a target network device, wherein the handover request message carries first indication information that indicates a terminal group.

2. The method of claim 1, wherein the first indication information comprises one or more of the following:
a group identifier;
identification information of an intra-group relay terminal;
identification information of an intra-group remote terminal; and
user equipment, UE, context information corresponding to intra-group member terminals.

3. The method of claim 1 or 2, further comprising:
receiving a measurement report message from a terminal, and performing the handover decision based on the measurement report message.

4. The method of claim 3, further comprising:
receiving a measurement report result only from the intra-group relay terminal;
or,
receiving a measurement report result from all or part of the intra-group member terminals.

5. The method of claim 4, wherein in case of receiving the measurement report result only from the intra-group relay terminal, the method further comprises:
transmitting a measurement configuration only to the intra-group relay terminal;
or,
transmitting a measurement configuration to all or part of the intra-group member terminals, and allowing only the intra-group relay terminal to perform measurement report.

6. The method of claim 4, wherein in case of receiving the measurement report result from all or part of the intra-group member terminals, the method further comprises:
transmitting a measurement configuration to each intra-group member terminal that is required to perform the measurement report.

7. The method of claim 4, further comprising:
receiving the measurement report message transmitted from the intra-group relay terminal or the intra-group member terminals, wherein the measurement report message comprises a measurement result from the intra-group relay terminal or the intra-group member terminals, and a measurement result from other intra-group member terminals.

8. The method of claim 3, wherein the measurement report message comprises second indication information, wherein the second indication information is used for indicating a handover type that is expected to be performed, and the handover type comprises group handover and single terminal handover.

9. The method of claim 1, wherein the handover request message further comprises third indication information that changes an intra-group relay terminal;
or,
the handover request message further comprises a measurement result from intra-group member terminals for a target cell.

10. The method of claim 1, further comprising:
after receiving a handover request acknowledgement message transmitted from the target network device, transmitting a radio resource control, RRC, reconfiguration message to an intra-group relay terminal and other intra-group member terminals, respectively;
or,
after receiving a handover request acknowledgement message transmitted from the target network device, notifying other intra-group member terminals of a new intra-group relay terminal through a source intra-group relay terminal in case that an intra-group relay terminal is changed.

11. A method for group handover, applied to a target network device, comprising:
receiving a handover request message transmitted from a source network device, wherein the handover request message carries first indication information that indicates a terminal group.

12. The method of claim 11, wherein after receiving the handover request message transmitted from the source network device, the method further comprises any one of the following:
performing group admission decision to determine that all intra-group member terminals are admissible, transmitting a handover request acknowledgement message to the source network device;
performing group admission decision to determine that only part of intra-group member terminals are admissible, transmitting a handover request acknowledgement message to the source network device, wherein the handover request acknowledgement message comprises fourth indication information, and the fourth indication information is used for indicating identification information of admissible intra-group member terminals; and
performing group admission decision to determine that only part of bearers of part of intra-group member terminals are admissible, transmitting a handover request acknowledgement message to the source network device, wherein the handover request acknowledgement message comprises fifth indication information, and the fifth indication information is used for indicating identification information of admissible intra-group member terminals and information of admissible bearers of the admissible intra-group member terminals.

13. The method of claim 11, wherein the handover request message further comprises a measurement result from intra-group member terminals for a target cell;
the method further comprises:
changing an intra-group relay terminal based on the measurement result.

14. The method of claim 12, wherein the handover request acknowledgement message comprises sixth indication information that indicates a new intra-group relay terminal.

15. The method of claim 12 or 14, wherein the handover request acknowledgement message further comprises one or more of the following:
configuration information of an end-to-end bearer between the intra-group member terminals and the target network device;
configuration information of a direct communication interface bearer between the intra-group member terminals and an intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

16. A method for group handover, applied to a terminal, comprising:
transmitting a measurement report message to a source network device based on a received measurement configuration.

17. The method of claim 16, wherein in case that the measurement configuration only allows an intra-group relay terminal to perform measurement report, the transmitting the measurement report message to the source network device comprises:
in case that the terminal is an intra-group relay terminal, transmitting the measurement report message to the source network device.

18. The method of claim 16, wherein:
in case that the terminal is an intra-group relay terminal, the measurement report message comprises a measurement result from the intra-group relay terminal and a measurement result from other intra-group member terminals;
or,
in case that the terminal is an intra-group remote terminal, the measurement report message comprises a measurement result from the intra-group remote terminal and a measurement result from other intra-group member terminals.

19. The method of claim 18, wherein the measurement result from other intra-group member terminals is obtained through a direct communication interface periodic interaction or an event-triggered interaction, a trigger event comprises one or more of the following:
a request from other intra-group member terminals; and
other intra-group member terminals measure that a signal quality of a neighboring cell is higher that a threshold.

20. The method of claim 16, wherein the measurement report message comprises second indication information, wherein the second indication information is used for indicating a handover type that is expected to be performed, and the handover type comprises group handover and single terminal handover.

21. The method of claim 16, further comprising:
receiving a radio resource control, RRC, reconfiguration message transmitted from the source network device; or,
in case that an intra-group relay terminal is changed, notifying, by a source intra-group relay terminal, other intra-group member terminals of a new intra-group relay terminal;
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

22. The method of claim 16, further comprising:
in case that the terminal is an intra-group relay terminal, after completing random access to a target network device or transmitting a radio resource control, RRC, reconfiguration complete message to a target network device, transmitting seventh indication information to other intra-group member terminals, wherein the seventh indication information is used for indicating other intra-group member terminals to transmit the RRC reconfiguration complete message to the target network device through the intra-group relay terminal.

23. A source network device, comprising:
a processor,
a memory storing a computer program, and
a transceiver transmitting and receiving data under a control of the processor,
wherein the computer program, when executed by the processor, causes the source network device to perform the following operations of:
performing a handover decision; and
after determining to perform the group handover, transmitting a handover request message to a target network device, wherein the handover request message carries first indication information that indicates a terminal group.

24. The device of claim 23, wherein the first indication information comprises one or more of the following:
a group identifier;
identification information of an intra-group relay terminal;
identification information of an intra-group remote terminal; and
user equipment, UE, context information corresponding to intra-group member terminals.

25. The device of claim 23 or 24, wherein the operation further comprises:
receiving a measurement report message from a terminal, and performing the handover decision based on the measurement report message.

26. The device of claim 25, wherein the operation further comprises:
receiving a measurement report result only from the intra-group relay terminal;
or,
receiving a measurement report result from all or part of the intra-group member terminals.

27. The device of claim 26, wherein in case of receiving the measurement report result only from the intra-group relay terminal, the operation further comprises:
transmitting a measurement configuration only to the intra-group relay terminal;
or,
transmitting a measurement configuration to all or part of the intra-group member terminals, and allowing only the intra-group relay terminal to perform measurement report.

28. The device of claim 26, wherein in case of receiving the measurement report result from all or part of the intra-group member terminals, the operation further comprises:
transmitting a measurement configuration to each intra-group member terminal that is required to perform the measurement report.

29. The device of claim 26, wherein the operation further comprises:
receiving the measurement report message transmitted from the intra-group relay terminal or the intra-group member terminals, wherein the measurement report message comprises a measurement result from the intra-group relay terminal or the intra-group member terminals, and a measurement result from other intra-group member terminals.

30. The device of claim 25, wherein the measurement report message comprises second indication information, wherein the second indication information is used for indicating a handover type that is expected to be performed, and the handover type comprises group handover and single terminal handover.

31. The device of claim 23, wherein the handover request message further comprises third indication information that changes an intra-group relay terminal;
or,
the handover request message further comprises a measurement result from intra-group member terminals for a target cell.

32. The device of claim 23, wherein the operation further comprises:
after receiving a handover request acknowledgement message transmitted from the target network device, transmitting a radio resource control, RRC, reconfiguration message to an intra-group relay terminal and other intra-group member terminals, respectively;
or,
after receiving a handover request acknowledgement message transmitted from the target network device, notifying other intra-group member terminals of a new intra-group relay terminal through a source intra-group relay terminal in case that an intra-group relay terminal is changed.

33. A target network device, comprising:
a processor,
a memory storing a computer program, and
a transceiver transmitting and receiving data under a control of the processor,
wherein the computer program, when executed by the processor, causes the target network device to perform the following operations of:
receiving a handover request message transmitted from a source network device, wherein the handover request message carries first indication information that indicates a terminal group.

34. The device of claim 33, wherein after receiving the handover request message transmitted from the source network device, the operation further comprises any one of the following:
performing group admission decision to determine that all intra-group member terminals are admissible, transmitting a handover request acknowledgement message to the source network device;
performing group admission decision to determine that only part of intra-group member terminals are admissible, transmitting a handover request acknowledgement message to the source network device, wherein the handover request acknowledgement message comprises fourth indication information, and the fourth indication information is used for indicating identification information of admissible intra-group member terminals; and
performing group admission decision to determine that only part of bearers of part of intra-group member terminals are admissible, transmitting a handover request acknowledgement message to the source network device, wherein the handover request acknowledgement message comprises fifth indication information, and the fifth indication information is used for indicating identification information of admissible intra-group member terminals and information of admissible bearers of the admissible intra-group member terminals.

35. The device of claim 33, wherein the handover request message further comprises a measurement result from intra-group member terminals for a target cell;
the operation further comprises:
changing an intra-group relay terminal based on the measurement result.

36. The device of claim 34, wherein the handover request acknowledgement message comprises sixth indication information that indicates a new intra-group relay terminal.

37. The device of claim 34 or 36, wherein the handover request acknowledgement message further comprises one or more of the following:
configuration information of an end-to-end bearer between the intra-group member terminals and the target network device;
configuration information of a direct communication interface bearer between the intra-group member terminals and an intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

38. A terminal, comprising:
a processor,
a memory storing a computer program, and
a transceiver transmitting and receiving data under a control of the processor,
wherein the computer program, when executed by the processor, causes the terminal to perform the following operations of:
transmitting a measurement report message to a source network device based on a received measurement configuration.

39. The terminal of claim 38, wherein in case that the measurement configuration only allows an intra-group relay terminal to perform measurement report, the transmitting the measurement report message to the source network device comprises:
in case that the terminal is an intra-group relay terminal, transmitting the measurement report message to the source network device.

40. The terminal of claim 38, wherein:
in case that the terminal is an intra-group relay terminal, the measurement report message comprises a measurement result from the intra-group relay terminal and a measurement result from other intra-group member terminals;
or,
in case that the terminal is an intra-group remote terminal, the measurement report message comprises a measurement result from the intra-group remote terminal and a measurement result from other intra-group member terminals.

41. The terminal of claim 40, wherein the measurement result from other intra-group member terminals is obtained through a direct communication interface periodic interaction or an event-triggered interaction, a trigger event comprises one or more of the following:
a request from other intra-group member terminals; and
other intra-group member terminals measure that a signal quality of a neighboring cell is higher that a threshold.

42. The terminal of claim 38, wherein the measurement report message comprises second indication information, wherein the second indication information is used for indicating a handover type that is expected to be performed, and the handover type comprises group handover and single terminal handover.

43. The terminal of claim 38, wherein the operation further comprises:
receiving a radio resource control, RRC, reconfiguration message transmitted from the source network device; or,
in case that an intra-group relay terminal is changed, notifying, by a source intra-group relay terminal, other intra-group member terminals of a new intra-group relay terminal;
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

44. The terminal of claim 38, wherein the operation further comprises:
in case that the terminal is an intra-group relay terminal, after completing random access to a target network device or transmitting a radio resource control, RRC, reconfiguration complete message to a target network device, transmitting a seventh indication information to other intra-group member terminals, wherein the seventh indication information is used for indicating other intra-group member terminals to transmit the RRC reconfiguration complete message to the target network device through the intra-group relay terminal.

45. An apparatus for group handover, applied to a source network device, comprising:
a decision unit, used for performing a handover decision; and
a first transmitting unit, used for, after determining to perform the group handover, transmitting a handover request message to a target network device, wherein the handover request message carries first indication information that indicates a terminal group.

46. The apparatus of claim 45, wherein the first indication information comprises one or more of the following:
a group identifier;
identification information of an intra-group relay terminal;
identification information of an intra-group remote terminal; and
user equipment, UE, context information corresponding to intra-group member terminals.

47. The apparatus of claim 45 or 46, wherein the decision unit is further used for:
receiving a measurement report message from a terminal, and performing the handover decision based on the measurement report message.

48. The apparatus of claim 47, wherein the decision unit is further used for:
receiving a measurement report result only from the intra-group relay terminal;
or,
receiving a measurement report result from all or part of the intra-group member terminals.

49. The apparatus of claim 48, wherein in case of receiving the measurement report result only from the intra-group relay terminal, the first transmitting unit is further used for:
transmitting a measurement configuration only to the intra-group relay terminal;
or,
transmitting a measurement configuration to all or part of the intra-group member terminals, and allowing only the intra-group relay terminal to perform measurement report.

50. The apparatus of claim 48, wherein in case of receiving the measurement report result from all or part of the intra-group member terminals, the first transmitting unit is further used for:
transmitting a measurement configuration to each intra-group member terminal that is required to perform the measurement report.

51. The apparatus of claim 48, wherein the decision unit is further used for:
receiving the measurement report message transmitted from the intra-group relay terminal or the intra-group member terminals, wherein the measurement report message comprises a measurement result from the intra-group relay terminal or the intra-group member terminals, and a measurement result from other intra-group member terminals.

52. The apparatus of claim 47, wherein the measurement report message comprises second indication information, wherein the second indication information is used for indicating a handover type that is expected to be performed, and the handover type comprises group handover and single terminal handover.

53. The apparatus of claim 45, wherein the handover request message further comprises third indication information that changes an intra-group relay terminal;
or,
the handover request message further comprises a measurement result from intra-group member terminals for a target cell.

54. The apparatus of claim 45, wherein the first transmitting unit is further used for:
after receiving a handover request acknowledgement message transmitted from the target network device, transmitting a radio resource control, RRC, reconfiguration message to an intra-group relay terminal and other intra-group member terminals, respectively;
or,
after receiving a handover request acknowledgement message transmitted from the target network device, notifying other intra-group member terminals of a new intra-group relay terminal through a source intra-group relay terminal in case that an intra-group relay terminal is changed.

55. An apparatus for group handover, applied to a target network device, comprising:
a second receiving unit, used for receiving a handover request message transmitted from a source network device, wherein the handover request message carries first indication information that indicates a terminal group.

56. The apparatus of claim 55, wherein the apparatus further comprises a second transmitting unit, used for any one of the following:
performing group admission decision to determine that all intra-group member terminals are admissible, transmitting a handover request acknowledgement message to the source network device;
performing group admission decision to determine that only part of intra-group member terminals are admissible, transmitting a handover request acknowledgement message to the source network device, wherein the handover request acknowledgement message comprises fourth indication information, and the fourth indication information is used for indicating identification information of admissible intra-group member terminals; and
performing group admission decision to determine that only part of bearers of part of intra-group member terminals are admissible, transmitting a handover request acknowledgement message to the source network device, wherein the handover request acknowledgement message comprises fifth indication information, and the fifth indication information is used for indicating identification information of admissible intra-group member terminals and information of admissible bearers of the admissible intra-group member terminals.

57. The apparatus of claim 55, wherein the handover request message further comprises a measurement result from intra-group member terminals for a target cell;
the apparatus further comprises:
a changing unit, used for changing an intra-group relay terminal based on the measurement result.

58. The apparatus of claim 56, wherein the handover request acknowledgement message comprises sixth indication information that indicates a new intra-group relay terminal.

59. The apparatus of claim 56 or 58, wherein the handover request acknowledgement message further comprises one or more of the following:
configuration information of an end-to-end bearer between the intra-group member terminals and the target network device;
configuration information of a direct communication interface bearer between the intra-group member terminals and an intra-group relay terminal;
configuration information of a Uu interface bearer between the intra-group relay terminal and the target network device;
a mapping relationship between a direct communication interface bearer, which is between the intra-group member terminals and the intra-group relay terminal, and a Uu interface bearer, which is between the intra-group relay terminal and the target network device;
a mapping relationship between a direct communication interface bearer, which is between the intra-group member terminals and the intra-group relay terminal, and an end-to-end bearer, which is between the intra-group member terminals and the target network device;
a mapping relationship between a Uu interface bearer, which is between the intra-group relay terminal and the target network device, and an end-to-end bearer, which is between the intra-group member terminals and the target network device; and
a mapping relationship between a direct communication interface bearer, which is between the intra-group member terminals and the intra-group relay terminal, a Uu interface bearer, which is between the intra-group relay terminal and the target network device, and an end-to-end bearer, which is between the intra-group member terminals and the target network device.

60. An apparatus for group handover, applied to a terminal, comprising:
a third transmitting unit, used for transmitting a measurement report message to a source network device based on a received measurement configuration.

61. The apparatus of claim 60, wherein in case that the measurement configuration only allows an intra-group relay terminal to perform measurement report, the third transmitting unit is used for:
in case that the terminal is an intra-group relay terminal, transmitting the measurement report message to the source network device.

62. The apparatus of claim 60, wherein:
in case that the terminal is an intra-group relay terminal, the measurement report message comprises a measurement result from the intra-group relay terminal and a measurement result from other intra-group member terminals;
or,
in case that the terminal is an intra-group remote terminal, the measurement report message comprises a measurement result from the intra-group remote terminal and a measurement result from other intra-group member terminals.

63. The apparatus of claim 62, wherein the measurement result from other intra-group member terminals is obtained through a direct communication interface periodic interaction or an event-triggered interaction, a trigger event comprises one or more of the following:
a request from other intra-group member terminals; and
other intra-group member terminals measure that a signal quality of a neighboring cell is higher that a threshold.

64. The apparatus of claim 60, wherein the measurement report message comprises second indication information, wherein the second indication information is used for indicating a handover type that is expected to be performed, and the handover type comprises group handover and single terminal handover.

65. The apparatus of claim 60, wherein the apparatus further comprises a third receiving unit, used for:
receiving a radio resource control, RRC, reconfiguration message transmitted from the source network device; or,
in case that an intra-group relay terminal is changed, notifying, by a source intra-group relay terminal, other intra-group member terminals of a new intra-group relay terminal;
in case that the intra-group relay terminal is changed, receiving the new intra-group relay terminal notified by the source intra-group relay terminal, releasing a direct communication connection with the source intra-group relay terminal, and establishing a direct communication connection with the new intra-group relay terminal.

66. The apparatus of claim 60, wherein the third transmitting unit is further used for:
in case that the terminal is an intra-group relay terminal, after completing random access to a target network device or transmitting a radio resource control, RRC, reconfiguration complete message to a target network device, transmitting seventh indication information to other intra-group member terminals, wherein the seventh indication information is used for indicating other intra-group member terminals to transmit the RRC reconfiguration complete message to the target network device through the intra-group relay terminal.

67. A processor readable storage medium storing computer programs that, when executed by a processor, cause the processor to perform the method of any one of claims 1 to 10, or cause the processor to perform the method of any one of claims 11 to 15, or cause the processor to perform the method of any one of claims 16 to 22.
